# EUROPEAN PATENT APPLICATION

(11) **EP 0 783 993 A2**
(43) Date of publication of application: **16.07.1997**
(21) Application number: 97300012.8
(22) Date of filing: 02.01.1997
(51) Int. Cl.: B60R 16/00

(54) **Horn switch jacket**

(30) Priority: 11.01.1996 US 585269
(71) Applicant: MORTON INTERNATIONAL, INC., Chicago, Illinois 60606 (US)
(72) Inventor: Ricks, Merle Kay, Layton, Utah 84040 (US); Booth, Kevin Wayne, Mesa, Arizona 85210 (US)
(74) Representative: Johnstone, Douglas Ian

(57) **Abstract**

A jacket (12) for accommodating a horn switch (14) in a pocket adjacent an inner surface of a vehicle occupant restraint airbag module cover. The jacket (12) comprises a front cover (28), a back cover (30), a hinge portion (32) interconnecting the covers (28, 30) and securing means including two tabs (40) extending from the back cover (30) which are engageable with complementary receptors (42) extending from the front cover (28). The securing means may alternatively include a resilient U-shaped lip, posts with heads which engage complementary holes or a weld. The switch (14) may comprise parallel columns of conductive strips (22) connected by resistive elements (20). Parallel ribs (50, 60) on inner surfaces of the covers (28, 30), perpendicular to the columns, are arranged to deform the resistive elements (20) when the jacket is pressed thereby changing their resistance. The switch may alternatively be a membrane switch.

## Description

The present invention relates to a horn switch assembly and, more particularly, to a horn switch jacket for use with a horn switch assembly adapted for insertion into a horn switch pocket of a driver side airbag module.
Driver side airbag modules, which include an airbag cushion and an airbag module cover, are normally positioned within a hub of a steering wheel of a motor vehicle. The hub of the steering wheel also happens to be the same area which conventionally includes a horn switch assembly. Accordingly, the airbag module cover must additionally serve to actuate the horn switch. A horn switch assembly normally includes a horn switch and a backing plate attached to an inner surface of a horn actuation face of the airbag module cover. The horn switch and backing plate are usually attached to the inner surface by ultrasonic welding or heat staking.

Many horn switch assemblies include a membrane horn switch. Membrane switches conventionally comprise two very thin sheets having conductive coatings thereon which are normally separated by thin spacers. Pressure on the switch pushes the conductive surfaces together to close a circuit and actuate the horn. Normally, a plurality of force concentrators are positioned on the inner surface of the horn actuation area of the airbag module cover to transfer driver applied pressure more efficiently to the horn switch.

Some horn switch assemblies include a bend sensor horn switch that includes a bend sensitive variable resistance circuit. The resistance of the variable resistance circuit measurably changes as it is bent and the variable resistance circuit is connectable to a horn control circuit that responds to extremely rapid changes in resistance but not to more gradual changes caused by, for example, temperature variations or close packing of the horn switch within the airbag module. Normally, a plurality of force concentrators are positioned on the inner surface of the horn actuation area of the airbag module cover and a plurality of supports are positioned on the backing plate. The force concentrators and supports are arranged to bend the variable resistance circuit in preferably only one axis or direction. In addition, the force concentrators and supports are provided in the form of elongated ribs for translating a localized driver-applied force over a greater area of the bend sensor.

Mounting the horn switch assembly to the airbag module cover by ultrasonic welding or heat staking has been found to be a time consuming assembly process that increases the cost of manufacturing the airbag module. In addition, the horn switch is sometimes damaged by heat staking, requiring the replacement of the horn switch and airbag module cover. A horn switch assembly welded to the airbag module cover requires replacing the entire airbag module cover when replacing damaged or defective horn switches. Furthermore, heat staking puts constraints on the design, material and manufacture of the airbag module cover.

One alternative to mounting the horn switch assembly by heat staking or welding is to provide a horn switch pocket in the airbag module for receiving and holding the horn switch assembly against the inner surface of the horn actuation area of the airbag module cover. An example of such a horn switch pocket is shown and described in co-pending US patent application 08/587,855.

There is, therefore, a need for a horn switch assembly that is adapted to be mounted in a horn switch pocket of an airbag module. There is a further need for the horn switch assembly to be provided in embodiments incorporating a membrane horn switch and a bend sensor horn switch.

An object, therefore, of the present invention is to provide a horn switch assembly that meets one or more of the above needs. In carrying out this invention there is provided a horn switch jacket for use with a horn switch as part of a horn switch assembly for insertion into a horn switch pocket adjacent an airbag module cover, whereby the horn switch assembly does not have to be heat staked or welded to the airbag module cover. The horn switch jacket comprises a jacket front cover adapted to be positioned in front of the horn switch, and a jacket back cover adapted to be positioned behind the horn switch. A hinge portion connects a first edge of the jacket front cover to a first edge of the jacket back cover, and securing means is provided for securing the jacket back cover to the jacket front cover with the horn switch held therebetween.

According to one aspect of the present invention, a plurality of spaced-apart force concentrators extend rearwardly from a rear inner surface of the jacket front cover, and the horn switch jacket is adapted for use with a horn switch comprising a membrane horn switch. According to another aspect of the present invention, a plurality of spaced-apart force concentrators extend rearwardly from a rear inner surface of the jacket front cover, a plurality of supports extend forwardly from a front inner surface of the jacket back cover and the horn switch jacket is adapted for use with a bend sensor horn switch having a plurality of spaced-apart resistive elements.

The invention together with further objects, features, advantages and aspects thereof, will be more clearly understood from the following description taken in connection with the accompanying drawings in which:
FIG. **1** is a rear elevation view, partially cut away, of a horn switch assembly according to the present invention;
FIG. **2** is a cross sectional view of the horn switch assembly taken along the line **2 - 2** of FIG. **1**;
FIG. **3** is a rear elevation view, partially cut away, of another horn switch assembly according to the present invention;
FIG. **4** is a cross sectional view of the horn switch assembly taken along the line **4 - 4** of FIG. **3**;
FIG. **5** is a rear elevation view, partially cut away, of an additional horn switch assembly according to the present invention;
FIG. **6** is a cross sectional view of the horn switch assembly taken along the line **6 - 6** of FIG. **5**;
FIG. **7** is a rear elevation view, partially cut away, of a further horn switch assembly according to the present invention;
FIG. **8** is a cross sectional view of the horn switch assembly taken along the line **8 - 8** of FIG. **7**;
FIG. **9** is a rear elevation view, partially cut away, of still another horn switch assembly according to the present invention;
FIG. **10** is a cross sectional view of the horn switch assembly taken along the line **10 - 10** of FIG. **9**.

The same reference numerals refer to the same elements throughout the various figures.

The present invention is directed to a horn switch jacket for use with a horn switch as part of a horn switch assembly for insertion into a horn switch pocket adjacent an airbag module cover. It is important to note that a horn switch jacket according to the present invention can be adapted for use with different types of horn switches, and can include other modifications without departing from the true spirit and scope of the present invention.

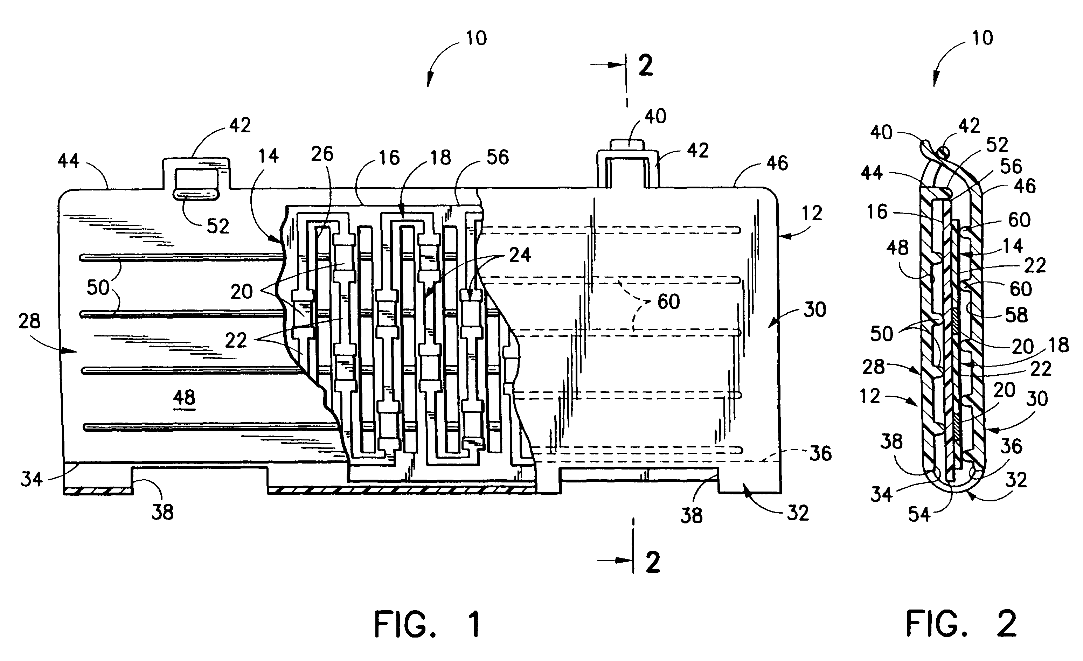

Referring first to FIGS. **1** through **2**, one possible embodiment of a horn switch jacket **12** according to the present invention for use with a bend sensor horn switch **14** as part of a horn switch assembly **10** is shown. The horn switch assembly **10** is for use in a driver side airbag module which is mounted in the hub of an automobile steering wheel. Driver side airbag modules are generally known in the art and, accordingly, are not described in detail as they do not in themselves constitute features of the present invention. The horn switch assembly **10** according to the present invention is adapted to be mounted within an airbag module simply by being inserted into a horn switch pocket attached to an airbag cushion or to a cushion strap of the airbag module. A horn switch pocket containing the horn switch assembly **10** is positioned tightly between a folded airbag cushion and a horn actuation face of an airbag module cover of the airbag module. The horn switch assembly **10** can then be actuated by a driver pushing on the horn actuation face of the airbag module cover.

The bend sensor horn switch **14** includes a flexible substrate **16** and a variable resistance circuit **18** adhered to the flexible substrate. In FIG. **2**, the flexible substrate **16** and variable resistance circuit **18** are shown with a thickness that is substantially disproportionate to their true thickness solely to facilitate illustration. The variable resistance circuit **18** basically comprises a flexible potentiometer which is known in the art. An example of a flexible potentiometer is shown and described in U.S. Patent 5,309,135. The variable resistance circuit **18** has a plurality of spaced-apart resistive elements **20** connected by a plurality of conductive strips **22**, and the variable resistance circuit is arranged in a plurality of parallel spaced-apart columns **24**. The conductive strips **22** comprise a flexible electrical conductive coating that may be applied to the flexible substrate **16** by any suitable means such as by screening conductive ink thereon, for example.

The resistance of the variable resistance circuit **18** changes as the resistive elements **20** are bent. The resistive elements **20** generally comprise a flexible electrical conductive coating that may also be applied to the flexible substrate **16** by any suitable means such as by screening conductive ink thereon. The resistive elements **20** can contain flexible carbon fibers which separate when the resistive elements **20** are bent in a particular direction. As the carbon fibers separate the resistance of the resistive elements **20** increase, changing the resistance of the variable resistance circuit **18** which is connectable to a remote power supply and to a remote horn control circuit utilized to actuate a remote horn.

The remote horn control circuit closes a circuit between the remote power supply and the remote horn when the driver presses against the front outer face of the airbag module cover with at least a threshold amount of force. The threshold amount of force causes the resistive elements **20** to bend and the resistance of the variable resistance circuit **18** to measurably change. A preferred horn control circuit only responds to rapid changes in the resistance of the variable resistance circuit **18** but not to more gradual changes. Normally, thermal expansion or contraction of the airbag module cover, curvature of the cover or close packing of the horn switch assembly **10** and a folded airbag cushion normally contained in an airbag module assembly may bend the resistive elements **20** and change the resistance of the variable resistance circuit **18** enough to inadvertently actuate the horn. However, the rate of change of resistance is very slow. A preferred horn control circuit prevents inadvertent actuation of the horn since only a force applied by a driver pressing on the airbag module cover will have the required rate of change of force or resistance necessary to actuate the horn. Those skilled in the art will appreciate that a variety of circuits may be employed to carry out the functions of a preferred horn control circuit. The horn control circuit may include a microprocessor that can be programmed to meet the specific requirements of an automotive manufacturer.

The flexible substrate **16** comprises electrical insulating material such as a suitable plastic material, for example MYLAR polyester or polyethylene with a thickness of approximately 0.10 millimeters. As shown in FIG. **1**, the flexible substrate **16** also includes slots **26** located between the columns **24** of the variable resistance circuit **18**. The slots **26** allow the resistive elements **20** in each column **24** to bend more easily in substantially one direction and, in the alternative, the flexible substrate **16** could simply include slits located on opposites sides of each column **24** of the variable resistance circuit **18**.

The horn switch jacket **12** is folded, like a book cover, over the bend sensor horn switch **14** to substantially enclose the bend sensor horn switch **14** and includes a jacket front cover **28**, a jacket back cover **30** and a hinge portion **32** that are unitary. The horn switch jacket **12** is made from a suitable resilient material such as a thermoplastic resin like polyurethane, for example. The hinge portion **32** connects a first edge **34** of the jacket front cover **28** to a first edge **36** of the jacket back cover **30** and allows the horn switch jacket **12** to be opened and closed like a book. As shown, the hinge portion **32** has a smaller thickness than the jacket front cover **28** or the jacket back cover **30** which allows the hinge portion to be more flexible. The hinge portion **32** may also include cut-outs **38** which allow further flexibility. Securing means secures the horn switch jacket **12** in a closed position around the bend sensor horn switch **14** and the securing means comprises two tabs **40** and two tab receptors **42**. The two tab receptors **42** extend from a second edge **44** of the jacket front cover **28** and have openings for receiving and retaining the two tabs **40** that extend from a second edge **46** of the jacket back cover **30** to secure the horn switch jacket **12** in a closed position and hold the bend sensor horn switch **14** between the jacket front cover and the jacket back cover. Alternatively, the securing means could comprise more than two tabs and tab receptors.

The jacket front cover **28**, which substantially covers the bend sensor horn switch **14**, has a rear inner surface **48** positioned in front of the bend sensor horn switch **14**. A plurality of spaced-apart force concentrators in the form of parallel, spaced-apart, elongated force concentration ribs **50** extend rearwardly from, and are preferably unitary with, the rear inner surface **48** of the jacket front cover **28**. The force concentration ribs **50** are generally perpendicular to the columns **24** of the variable resistance circuit **18** and are arranged on the rear inner surface **48** so that each resistive element **20** is positioned behind a force concentration rib. Alignment retaining means comprising two bumpers **52** extend rearwardly from the rear inner surface **48** of the jacket front cover **28**. A first edge **54** of the bend sensor horn switch **14** butts against the hinge portion **32** and a second edge **56** of the bend sensor horn switch **14** butts against the two bumpers **52** to ensure that the resistive elements **20** of the bend sensor horn switch **14** stay aligned with the force concentration ribs **50**. Alternatively, the alignment retaining means could be provided in another form.

The jacket back cover **30**, which also substantially covers the bend sensor horn switch **14**, has a front inner surface **58** positioned behind the bend sensor horn switch **14**. A plurality of spaced-apart supports in the form of parallel spaced-apart elongated support ribs **60** extend forwardly from, and are preferably unitary with, the front inner surface **58**. The support ribs **60** are arranged so that the support ribs are generally parallel to and offset from the force concentration ribs **50** when the horn switch jacket **12** is closed. The support ribs **60** are also generally perpendicular to the bend sensor columns **24** so that each conductive strip **22** is positioned in front of a support rib and each resistive element **20** is positioned between two adjacent support ribs **60**. Pressure applied to the jacket front cover **28** will cause at least one force concentration rib **50** to bend at least one resistive element **20** about two adjacent support ribs **60**.

The force concentration ribs **50** and support ribs **60**, in combination, assure that the resistive elements **20** of the bend sensor horn switch **14** are bent in substantially one axis or direction. In addition, the force concentration ribs **50** distribute a localized force applied to the jacket front cover **28** to more than one resistive element **20**. The present invention, also provides a horn switch assembly **10** that is self-contained and can be easily inserted into a horn switch pocket of an airbag module as opposed to being heat staked or welded to an airbag module cover. The horn switch assembly **10** can, therefore, be easily assembled to the airbag module and easily removed for servicing or replacement.

The bend sensor horn switch **14**, jacket front cover **28** and jacket back cover **30** as shown in FIG. **1** are generally rectangular but can be contoured to match the shape of an airbag module cover by using a thermal forming operation so that the bend sensor horn switch, jacket front cover and jacket back cover could also be square or circular, for example.

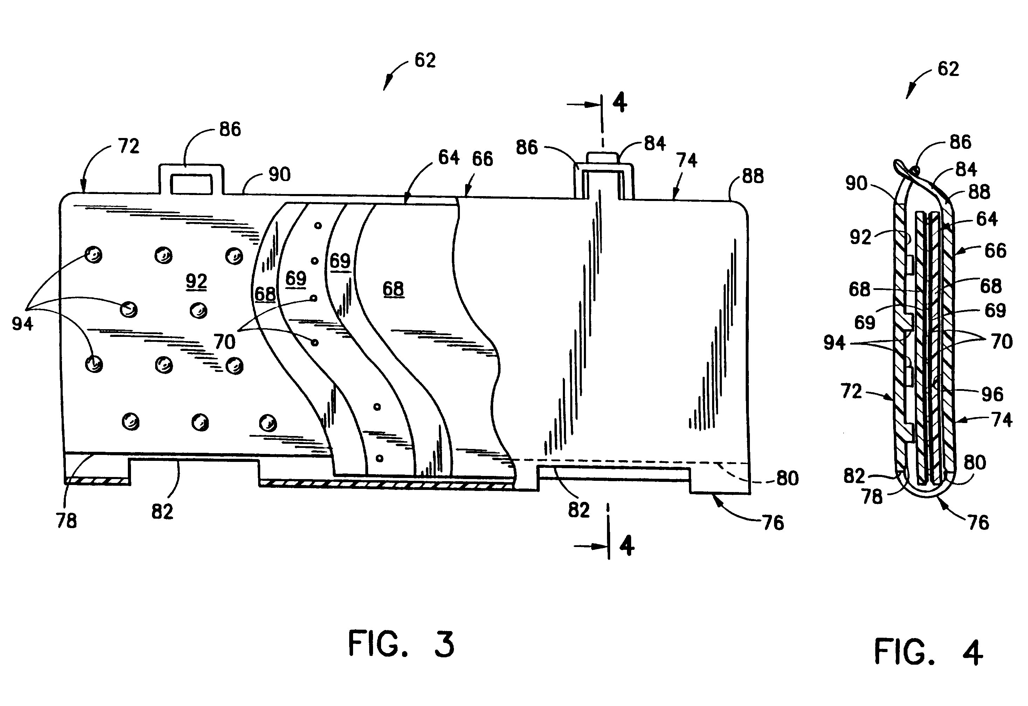

Referring to FIGS. **3** and **4**, another possible embodiment of a horn switch jacket **66** according to the present invention for use with a membrane horn switch **64** as part of a horn switch assembly **62** is shown. A membrane horn switch **64** is known to those skilled in the art and an example of a membrane horn switch is shown and described in U.S. Patent 5,369,232. Generally, the membrane horn switch **64** comprises two very thin sheets of flexible substrate **68** having conductive coatings **69** thereon which are separated by thin spacers **70**. Pressure on the membrane horn switch **64** pushes the conductive coatings **69** together to close a horn control circuit that the membrane horn switch is connectable to in order to actuate a remote horn.

The horn switch jacket **66** folds over and substantially encloses the membrane horn switch **64** and includes a jacket front cover **72**, a jacket back cover **74** and a hinge portion **76** that are unitary. The hinge portion **76** connects a first edge **78** of the jacket front cover **72** to a first edge **80** of the jacket back cover **74** and allows the horn switch jacket **66** to be opened and closed like a book. As shown the hinge portion **76** has a smaller thickness than the jacket front cover **72** or the jacket back cover **74**, and the smaller thickness allows the hinge portion to be more flexible. In addition, the hinge portion **76** can include cutouts **82** which allow further flexibility. Securing means for securing the horn switch jacket **66** in a closed position comprises two tabs **84** and two tab receptors **86**. The two tab receptors **86** extending from a second edge **90** of the jacket front cover **72** and have openings for receiving and catching the two tabs **84** that extend from a second edge **88** of the jacket back cover **74** to secure the horn switch jacket **66** in a closed position and hold the membrane horn switch **64** between the jacket front cover and the jacket back cover.

The jacket front cover **72** has a rear inner surface **92** positioned in front of the membrane horn switch **64**. A plurality of spaced-apart force concentrators in the form of spaced-apart, cylindrical force concentrators **94** extend rearwardly from, and are preferably unitary with, the rear inner surface **92**. Any force applied to the jacket front cover **72** is translated into a point force by the force concentrators **94**, which may alternatively be provided in non-cylindrical shapes such as square or elongated, for example. The jacket back cover **74** has a front inner surface **96** positioned behind the membrane horn switch **64**. Pressure applied to the jacket front cover **72** will cause the membrane horn switch **64** to be squeezed between at least one force concentrator **94** and the front inner surface **96** of the jacket back cover **74** to push the conductive coatings **69** together to close a horn control circuit and actuate a remote horn.

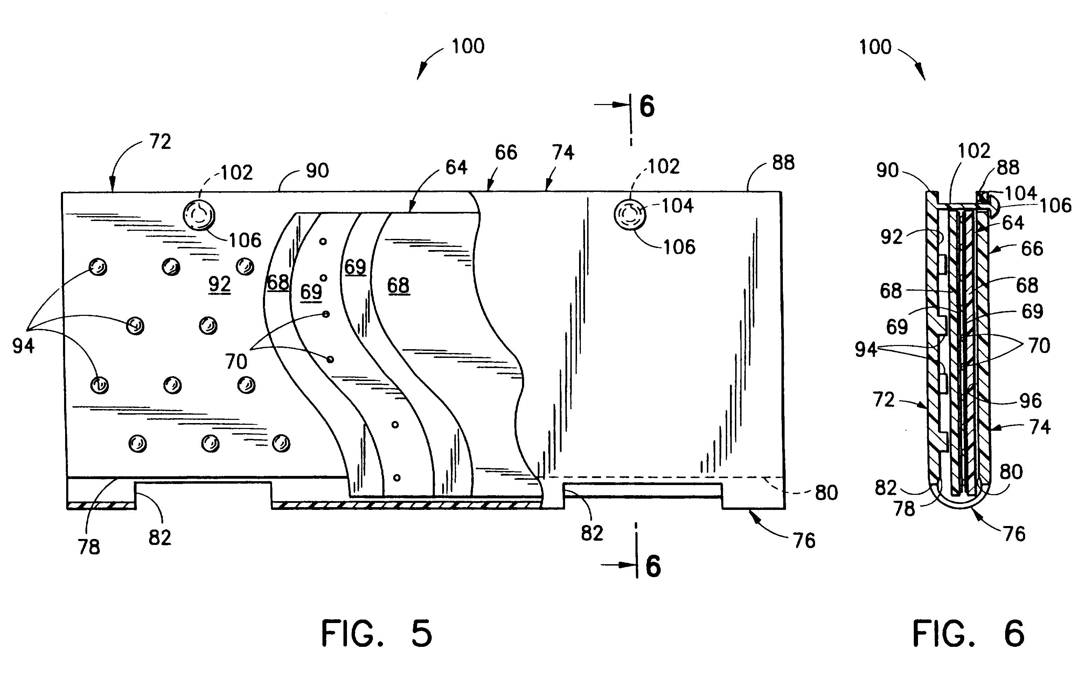

FIGS. **5** through **10** show horn switch jackets according to the present invention having examples of different securing means. Referring to FIGS. **5** and **6**, an additional horn switch assembly **100** according to the present invention is shown. The horn switch assembly **100** is similar to the horn switch assembly **62** of FIGS. **3** and **4**. In place of the two tabs **84** and two tab receptors **86** of the horn switch assembly **62** of FIGS. **3** and **4**, two posts **102** extend rearwardly from the rear inner surface **92** of the jacket front cover **72** and extend through two holes **104** defined by the jacket back cover **74**. The posts **102** are located adjacent the second edge **90** of the jacket front cover **72** and the holes **104** are located adjacent the second edge **88** of the jacket back cover **74**. The posts **102** have heads **106** which snap through the holes **104** and extend over the jacket back cover **74** adjacent the holes to secure the jacket back cover to the jacket front cover **74**. The horn switch assembly **10** of FIGS. **1** and **2** could also alternatively have posts and holes for securing the jacket front cover to the jacket back cover in place of tabs and tab receptors.

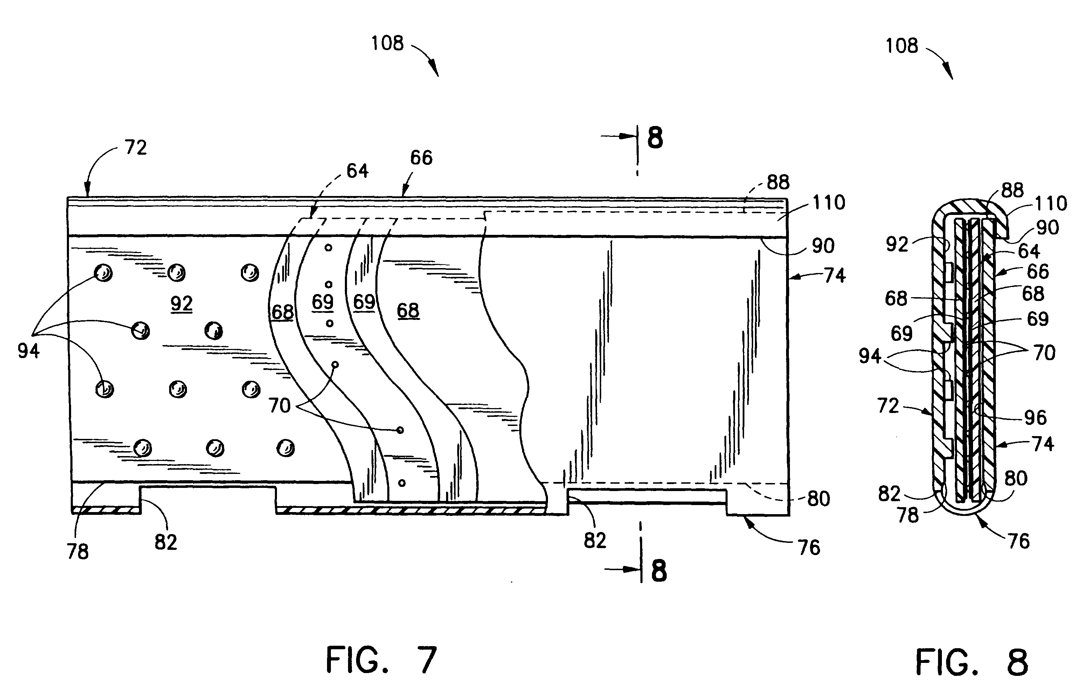

Referring to FIGS. **7** and **8**, an additional horn switch assembly **108** according to the present invention is shown. The horn switch assembly **108** is similar to the horn switch assembly **62** of FIGS. **3** and **4**. In place of the two tabs **84** and two tab receptors **86** of the horn switch **62** assembly of FIGS. **3** and **4** however, the second edge **90** of the jacket front cover **72** is curled over rearwardly to form a u-shaped lip **110** that catches or engages the second edge **88** of the jacket back cover **74** and secures the jacket back cover to the jacket front cover. The horn switch assembly **10** of FIGS. **1** and **2** could also alternatively have a lip for securing the jacket front cover to the jacket back cover in place of the tabs and tab receptors.

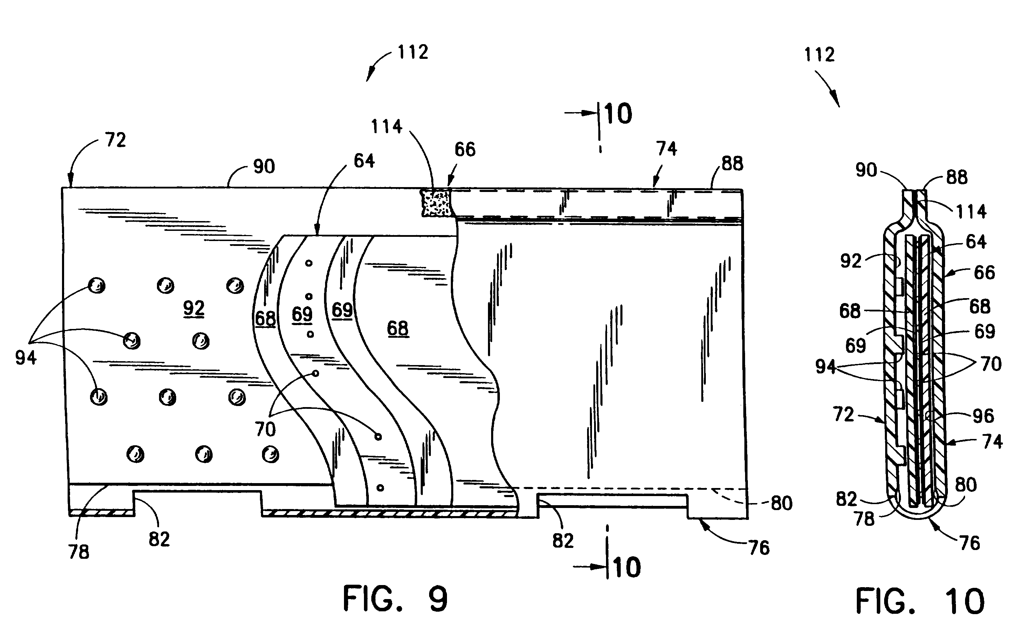

Referring to FIGS. **9** and **10**, an additional horn switch assembly **112** according to the present invention is shown. The horn switch assembly **112** is similar to the horn switch assembly **62** of FIGS. **3** and **4**. In place of the two tabs **84** and two tab receptors **86** of the horn switch assembly **62** of FIGS. **3** and **4**, a weld **114** secures the rear inner surface **92** of the jacket front cover **72** adjacent the second edge **90** of the jacket front cover to the front inner surface **96** of the jacket back cover **74** adjacent the second edge **88** of the jacket back cover. The horn switch assembly **10** of FIGS. **1** and **2** could also alternatively have the jacket front cover secured to the jacket back cover with a weld in place of the tabs and tab receptors.

## Claims

1. A horn switch jacket (12) for use with a horn switch (14) as part of a horn switch assembly (10) for inserting into a horn switch pocket adjacent an airbag module cover, the horn switch jacket comprising:
a jacket front cover (28) having a rear inner surface (48) adapted to be positioned in front of the horn switch;
a jacket back cover (30) adapted to be positioned behind the horn switch; and
securing means (40, 42) for securing the jacket back cover to the jacket front cover with the horn switch held therebetween.

2. The horn switch jacket (12) of claim 1 further comprising a hinge portion (32) connecting a first edge (54) of the jacket front cover (28) to a first edge of the jacket back cover (30).

3. The horn switch jacket (12) of Claim 1 or 2 wherein the securing means comprises:
two tabs receptors (42) extending from a second edge (44) of the jacket front cover (28); and
two tabs (40) extending from a second edge (46) of the jacket back cover (30) and engaging the two tab receptors.

4. The horn switch jacket (66) of Claim 1 or 2 wherein the securing means comprises:
two holes (104) extending through the jacket back cover (74); and
two posts (102) extending from the rear inner surface (92) of the jacket front cover (72) through the two holes in the jacket back cover and having heads (106) extending over the jacket back cover adjacent the holes.

5. The horn switch jacket (66) of Claim 1 or 2 wherein the securing means comprises:
a second edge (90) of the front cover (72) opposite the first edge (78) thereof forming a lip (110) engaging a second edge (88) of the back cover (74) opposite the first edge (80) thereof.

6. The horn switch jacket (66) of Claim 1 or 2 wherein the securing means comprises:
a weld (114) between the jacket front cover (72) and the jacket back cover (74).

7. The horn switch jacket (12) of any preceding claim further comprising:
a plurality of spaced-apart force concentrators (50) extending rearwardly from the rear inner surface (48) of the jacket front covver (28).

8. The horn switch jacket (12) of any preceding claim further comprising:
a plurality of spaced-apart supports (60) extending forwardly from a front inner surface (58) of jacket back cover (30).

9. A horn switch assembly (10) form mounting in a horn switch pocket adjacent an airbag module cover, the assembly comprising:
a horn switch jacket (12) according to any preceding claim; and
a horn switch (14) connectable to a horn control circuit and positioned behind the rear inner surface (48) of the jacket front cover (28).

10. The horn switch assembly (10) of claim 9 including a horn switch jacket (12) according to claims 7 and 8 wherein:
the horn switch (14) comprises a bend sensor horn switch having a plurality of spaced-apart resistive elements (20):
the plurality of spaced-apart force concentrators (50) are arranged so that each resistive element of the bend sensor horn switch is positioned behind a force concentrator; and
the plurality of spaced-apart supports (60) are arranged so that each resistive element is positioned between two adjacent supports, whereby pressure applied to the jacket front cover (28) will cause at least one force concentrator to bend a resistive element about two adjacent supports.

11. The horn switch assembly (10) of Claim 10 wherein:
the resistive elements (20) of the bend sensor horn switch (14) are arranged in a plurality of parallel spaced-apart columns (24);
the plurality of force concentrators (50) are in the form of parallel, spaced-apart, elongated force concentration ribs arranged so that the concentration ribs are generally perpendicular to the columns of resistive elements and each resistive element is positioned behind a force concentration rib; and
the plurality of supports (60) are in the form of parallel spaced-apart elongated support ribs arranged so that the support ribs are generally parallel to and offset from the force concentration ribs and are generally perpendicular to the columns of resistive elements with each resistive element positioned between two adjacent support ribs, whereby pressure applied to the jacket front cover (28) will cause at least one force concentration rib to bend at least one resistive element about two adjacent support ribs.

12. The horn switch assembly (10) of Claim 11 further comprising:
alignment retainer means (52) for retaining the bend sensor horn switch (14) aligned with the jacket front cover (28) and the jacket back cover (30) so that each resistive element (20) remains positioned behind a force concentration rib (50).

13. The horn switch assembly (10) of Claim 12 wherein the alignment retainer means (52) comprises:
two bumpers extending rearwardly from the rear inner surface (48) of the jacket front cover (28), with a first edge (56) of the bend sensor horn switch (14) butting against the hinge portion (32) and a second edge (56) of the bend sensor horn switch opposite the first edge of the bend sensor horn switch butting against the two bumpers.

14. The horn switch asembly (62) of claim 9 wherein the horn switch comprises a membrane horn switch (64).
